# EUROPEAN PATENT APPLICATION

(11) **EP 4 699 967 A1**
(43) Date of publication of application: **25.02.2026**
(21) Application number: 24792379.0
(22) Date of filing: 07.03.2024
(51) Int. Cl.: B65G 65/48, C01F 11/46

(54) **ROTARY SCRAPER AND METHOD FOR DISCHARGING FOREIGN MATTER HAVING HIGH SPECIFIC GRAVITY IN GYPSUM SLURRY**

(30) Priority: 20.04.2023 JP 2023069210
(71) Applicant: TOKUYAMA CORPORATION, Yamaguchi 745-8648 (JP)
(72) Inventor: HIRANAKA Shingo, Shunan-shi, Yamaguchi 745-8648 (JP)
(74) Representative: Kuhnen & Wacker Patent- und Rechtsanwaltsbüro PartG mbB
(86) International application number: PCT/JP2024/008775
(87) International publication number: WO 2024/219103

(57) **Abstract**

A rotary scraper for discharging foreign matters hard and with high specific gravity such as gravel settled in liquid is provided. The rotary scraper has reduced leakage of liquid and is easily dealt with regarding abrasion by the hard foreign matter. The rotary scraper comprises at least three plates of an upper plate; a lower plate; and an intermediate plate between the upper plate and the lower plate; the at least three plates overlapping with each other in a plan view. The at least three plates have openings passing through the plates in a vertical direction respectively, and a means for rotating the intermediate plate is provided. The openings are arranged to switch, by rotation of the intermediate plate, between a state where the opening of the upper plate and the opening of the intermediate plate are overlapped and the opening of the intermediate plate is not overlapped with the opening of the lower plate and a state where the opening of the intermediate plate and the opening of the lower plate are overlapped and the opening of the intermediate plate is not overlapped with the opening of the upper plate.

## Description

### Field of the Invention

The present invention relates to a rotary scraper suitable for discharging solid hard foreign matters with high specific gravity, such as gravel, sand, and small metal pieces, settled in a liquid. The invention also relates to a method for discharging foreign matters in gypsum slurry using the rotary scraper.

### Background Art

The applicant has established a commercial technology for reclaiming gypsum from waste gypsum boards. The waste gypsum boards are crushed and then baked and converted to hemihydrate or anhydrous type III gypsum. Then the baked gypsum is made into gypsum slurry; retained in a crystallization tank; gypsum particles such as dihydrate gypsum are generated in the slurry; and the gypsum particles are filtered by a solid-liquid separator. Waste gypsum boards contain frequently gravel and sand etc. derived from gypsum plaster. Further, they contain frequently small metal pieces such as nails and screws, etc. While it is desirable to discharge these hard, high specific gravity foreign matters in a pretreatment process, it is difficult to discharge them enough.

The applicant has proposed a method for discharging foreign matters with high specific gravity, such as gravel, sand, and metal pieces, from the gypsum slurry in the crystallization tank. According to the method, the difference between the foreign matters, and gypsum particles and water causes the foreign matters to settle on the bottom of a sedimentation tank, and then the foreign matters are discharged (Patent Document 1: JP 2020-65975A). To discharge the settled gravel and so on, a rotary scraper was used. In a standard rotary scraper, a cylindrical tank with a rotational and horizontal shaft is divided into multiple compartments by blades fixed to the rotational shaft. Solid matters such as gravel and so on, are discharged sequentially one compartment by one compartment by the rotation of the blades. An example of such a rotary scraper is described in Patent Document 2 (JP H10-113066A).

### Prior Art Documents

### Patent Documents

Patent Document 1: JP 2020-65975A
Patent Document 2: JP H10-113066A

### Summary of the Invention

### Problems to be Solved by the Invention

When the gap between the inner surface of the tank and the tips of the blades becomes wider, the slurry leaks from the gap. When discharging gravel, etc., they enter the gap and make the gap wider in a short period of time. Therefore, a rotary scraper is needed that can discharge hard, high specific gravity solid foreign matters such as gravel, sand, and small metal parts, from a liquid, with minimal liquid leakage and ability to deal with wear simply. Such a rotary scraper are suitable not only for discharging hard foreign matters in gypsum slurry but also for discharging high specific gravity, hard foreign matters that have settled in a liquid.

The object of this invention is to provide a rotary scraper that discharges hard, high specific gravity foreign matters such as gravel settled in a liquid, with minimal liquid leakage and ability to simply deal with wear caused by hard foreign matters. Another object of this invention is to discharge, with usage of the rotary scraper, high specific gravity foreign matters in gypsum slurry, for example, derived from wasted gypsum boards.

### Means for Solving the Problems

A rotary scraper according to the invention comprises at least three plates of an upper plate; a lower plate; and an intermediate plate between the upper plate and the lower plate; said at least three plates overlapping with each other in a plan view,
wherein said at least three plates have openings passing through the plates in a vertical direction respectively, and
a means for rotating the intermediate plate.

Said openings are arranged to switch, by rotation of the intermediate plate, between a state where the opening of the upper plate and the opening of the intermediate plate are overlapped and the opening of the intermediate plate is not overlapped with the opening of the lower plate and
a state where the opening of the intermediate plate and the opening of the lower plate are overlapped and the opening of the intermediate plate is not overlapped with the opening of the upper plate.

The rotary scraper according to the invention is, when in use, attached on a bottom of a sedimentation tank and so on, such that high specific gravity foreign matters settle over the rotary scraper. The settled foreign matters are introduced into the opening of the upper plate and move into the opening of the intermediate plate by gravity when the two openings are overlapped. When the intermediate plate further rotates and the opening of the intermediate plate overlaps with the opening of the lower plate, the foreign matters in the opening of the intermediate plate fall through the opening of the lower plate. Therefore, foreign matters are evacuated in specified amounts. Since the three openings do not overlap at the same time, the liquid does not leak out in large quantities. The species of liquid to be processed is arbitrary and the rotary scraper is suitable for discharging hard and with high specific gravity foreign matters from liquid. While the three plates are enough, two or more intermediate plates may be provided.

Preferably, the rotary scraper further comprises at least two resin films between the upper plate and the intermediate plate and between the intermediate plate and the lower plate.

The resin films are fixed to one of the plates respectively and are provided with openings respectively passing through the resin films and overlapping the openings of the plates to which the films are fixed to.

The upper plate and the lower plate are larger in diameter than the intermediate plate.
The rotary scraper further comprises an elastic ring surrounding annually the intermediate plate; and
a fastener mechanism compressing the elastic ring and fastening the upper plate and the lower plate with adjusting the gap between the upper plate and the lower plate.

The resin films between the plates prevent the plates from being damaged by hard foreign matters. Since the resin films are pressed by the fastener mechanism, the foreign matters are prevented from entering gaps between the plates and the films. If the foreign matters enters between the gap and damage the resin film, the elasticity of the film fills the gap. Therefore, the liquid leak is more reliably prevented. When the resin films are abraded, the adjustment of interval between the plates by the fastener mechanism fills the gaps between the plates and the resin films. The thickness of the resin films are, for example, 1mm to 30mm, a representative material of the films is PTFE, and the materials are preferably elastic, wear resistant, and with a low frictional coefficient.

A method according to the invention for discharging foreign matters having high specific gravity in gypsum slurry uses the rotary scraper according to the invention. The rotary scraper is attached on a bottom of a tank for gypsum slurry. The method comprises; a step for making sediment of foreign matters having high specific gravity in gypsum slurry are made settled on the bottom of the tank;
a step for introducing said sediment of the foreign matters through an opening at the bottom of the tank into the opening of the upper plate; and
a step for moving the sediment into the opening of the intermediate plate and then discharging the sediment to an outside from the opening of the intermediate plate through the opening of the lower plate, by the rotation of the intermediate plate.

According to the discharge method, the settled foreign matters are discharged in specified quantities through the opening in the upper plate and the opening of the intermediate plate. The leak of slurry is restricted, and the rotary scraper is operable without downtime for a longer period than conventional rotary scrapers are.

### Brief description of the drawings

[Fig. 1] A cross-sectional view of a rotary scraper according to an embodiment
[Fig. 2] A partial plan view of the rotary scraper according to the embodiment
[Fig. 3] A vertical cross-sectional view along the III-III direction in Fig. 2
[Fig. 4] A vertical cross-sectional view of a rotary scraper according to a modified embodiment
[Fig. 5] A process diagram of reclaiming gypsum from waste gypsum boards, using the rotary scraper according to the embodiment.

### Features for Carrying out the Invention

Embodiments for carrying out the invention will be described. The scope of the invention shall be determined based on the claims, taking into consideration the description in the specification and the well-known prior art in the field, and in accordance with the understanding of those skilled in the art.

### Embodiment

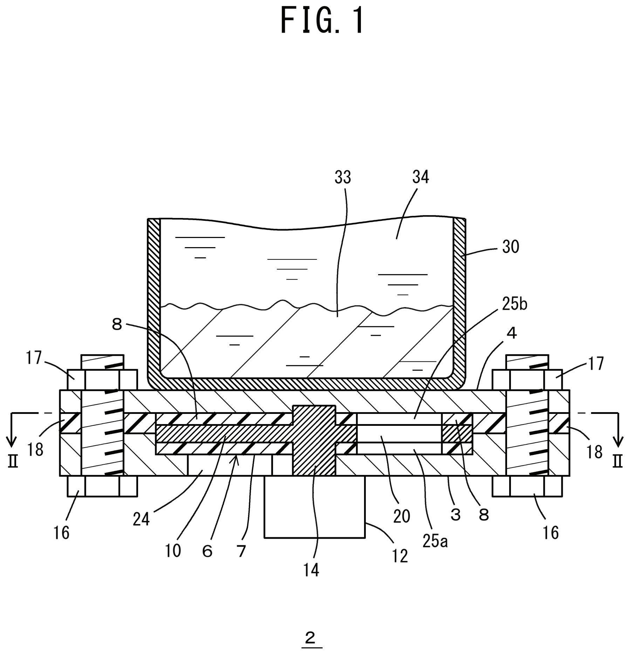

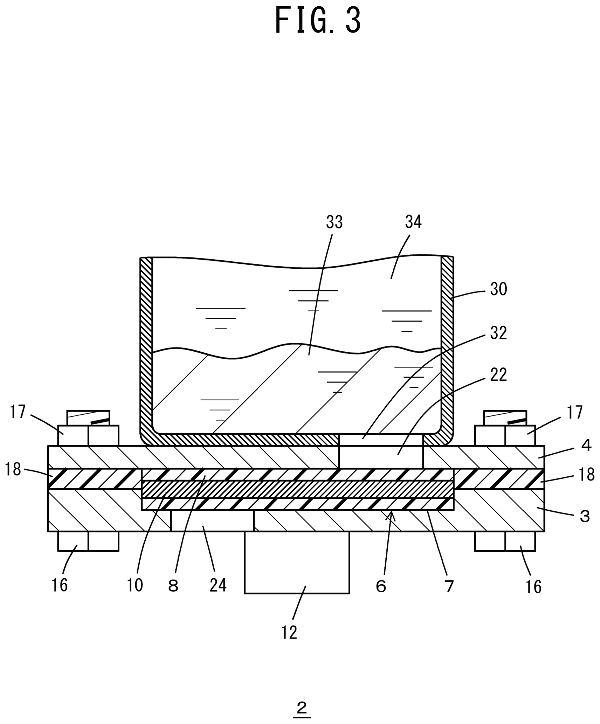

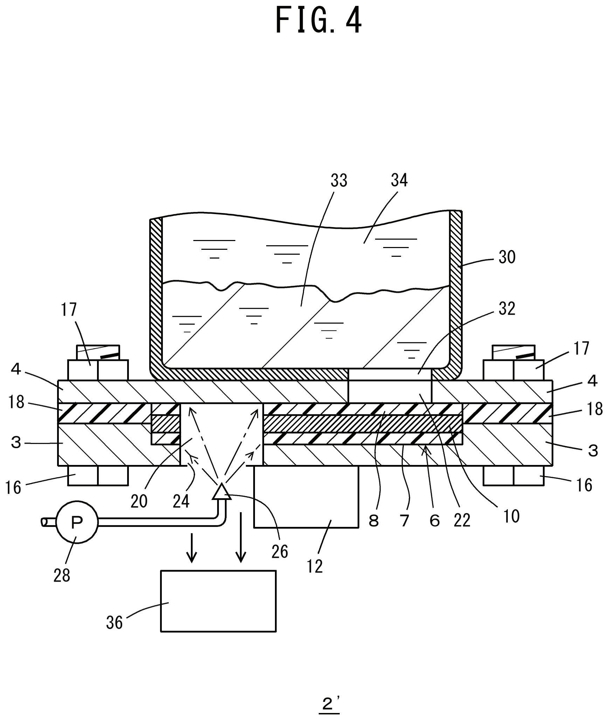

Figs. 1 to 3 show an embodiment of a rotary scraper 2, and Fig. 4 shows a modified embodiment of the rotary scraper 2'. In Figs. 1 to 3, the rotary scraper 2 (referred to as "scraper 2" below) is provided with a lower plate 3, an upper metal plate 4, and a rotating plate 6 between them. An adequate material of the plates 3, 4 is metal or plastic. The rotating plate 6 comprises an intermediate metal or plastic plate 10 and thick resin films 7, 8 over and under the plate 10. The plates 3, 4, and 6 are all circular in plan view, and the resin films 7, 8 are made of a fluororesin with a good lubricity and a high wear resistance.

The plates 3, 4, and 6 are all circular in plan view, and films 7, 8, and plate 10 are also circular. Additionally, the films 7, 8 have openings 25 a, b overlapping an opening 20 of the plate 10. In the embodiment, the films 7, 8 are rotated together with the plate 10, but the upper film 8 may be fixed to the upper plate 4, and the lower film 7 may be fixed to the lower plate 3. When the film 8 is fixed to the plate 4, the opening 25 b is overlapped with the opening 22. When the film 7 is fixed to the plate 3, the opening 25 a is overlapped with the opening 24.

The rotating plate 6 rotates via a motor 12 and a vertical shaft 14 for example. A circular elastic ring 18 is arranged between the upper and lower plates 3, 4, and the plates 3, 4 are pressed together by a fastener comprising bolts 16 and nuts 17 with adjustable clearance. Adequate materials of the elastic ring 18 are plastic rubber, elastomer, fluororesin, and so on. The elastic ring 18, the bolt 16, and the nut 17, prevent liquid such as gypsum slurry from leaking through the gaps between plates 3, 4.

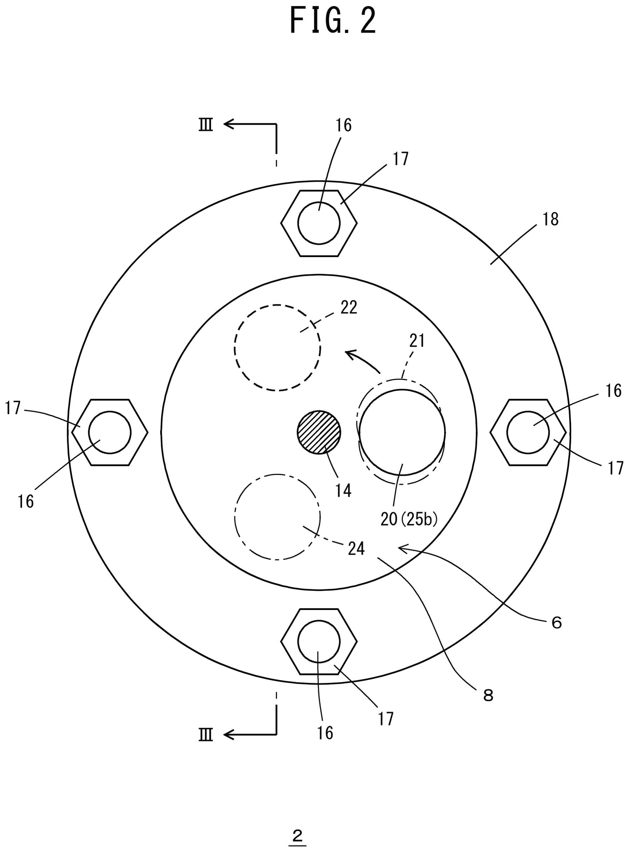

The rotating plate 6 has the opening 20, for example, circular, passing through the film 7, 8, and the plate 10. The lower plate 3 has an opening 24, for example, circular, and the upper plate 4 has an opening 22, for example, circular. In the embodiment, the openings 20, 22, and 24 are circular with the same diameter, but they need not to have the same shape and the same size. For example, an opening 21 with an arc-like edge shown by a dashed line in Fig. 2 may be used in place of the opening 20. The openings 20, 22, and 24 are positioned such that their centers are equidistant from the shaft 14 in the radial direction. When the shaft 14 and the rotating plate 6 are rotated as shown by an arrow in Fig. 2, the opening 20 first overlaps with the opening 22, and after the opening 20 and the opening 22 are separated, the opening 20 overlaps with the opening 24. The three openings 20, 22, and 24 are arranged so that they do not overlap with each other simultaneously. In the embodiment, the plates 10, 3, and 4 have one opening 20, 22, and 24 respectively, but they may have plural openings of the same number.

Denoted by 30 is a sedimentation tank which settles hard foreign matters in slurry 34 such as gravel 33 and has an opening 32 overlapping with the opening 22 at the bottom. The sedimentation tank 30 is not part of the rotary scraper 2, but the rotary scraper 2 is fixed on the bottom of the sedimentation tank 30 to discharge settled gravel, etc. and to prevent leakage of slurry 34.

The operation of the embodiment will be described. Gravel 33 and other foreign matters being settled at the bottom of the sedimentation tank 30 and the rotating plate 6 being rotated, when the openings 20 and 22 overlap with each other, gravel 33 and other foreign matters move into the opening 20. With the further rotation of the plate 6, the openings 20 and 22 are mutually separated, and when the openings 20 and 24 overlap with each other, gravel and so on, within the opening 20 fall through the opening 24 and are discharged from the bottom of the rotary scraper 2. If gravel and so on enter the space between the plate 3 and the film 7, or between the plate 4 and the film 8, the films 7, 8 gradually wear out, but the wear of plates 3, 4 is minimal. When the films 7, 8 wear out, tightening bolt 16 prevents slurry leakage.

In the embodiment, the discharge volume per rotation of the rotating plate 6 is determined by the size of the openings 20 and 22, and a constant amount of gravel and so on, is discharged. The elastic ring 18 and the upper film 8 prevent slurry leakage. Wear caused by gravel and son entered the gaps between the plates 3, 4 and the films 7, 8 is concentrated on the replaceable films 7, 8, and the wear of the films 7, 8 is compensated by tightening bolt 16.

Fig. 4 shows a modified embodiment in which a cleaning nozzle 26 and a pump 28 are provided inside or below the lower opening 24. Unless otherwise specified, it is the same as the embodiment of Figs. 1 to 3, and the same reference numbers denote the same elements. When the openings 24 and 20 overlap, gypsum slurry or the like is sprayed into openings 24 and 20 from the nozzle 26 by the pump 28 to clean the openings 20 and 24. Continuous spraying when the openings 24 and 20 do not overlap makes the gap between the film 7 and the plate 3 cleaned. Thus, gravel or other foreign matters are prevented from entering the gap between the plates 3, 4 and the films 7, 8.

Regarding conventional rotary scrapers, the inventor has considered to provide a plate-shaped self-lubricating member that closely contacts the cylindrical tank at the tip end of the blade to prevent gravel from entering the gap between the blade and the tank. However, when the blade rotates around a horizontal shaft, gravity acts on the gravel supplied to the tank to enter the gap between the tip end of the blade member and the tank. As a result, the wear of the tip member is faster than the present invention. Further, the adjustment of the gap between the tank and the tip member is difficult when the tip member is worn.

The rotary scrapers 2 and 2' of the embodiments are suitable for discharging hard foreign matters with high specific gravity in gypsum slurry and also for discharging hard foreign matters separated and settled in a liquid.

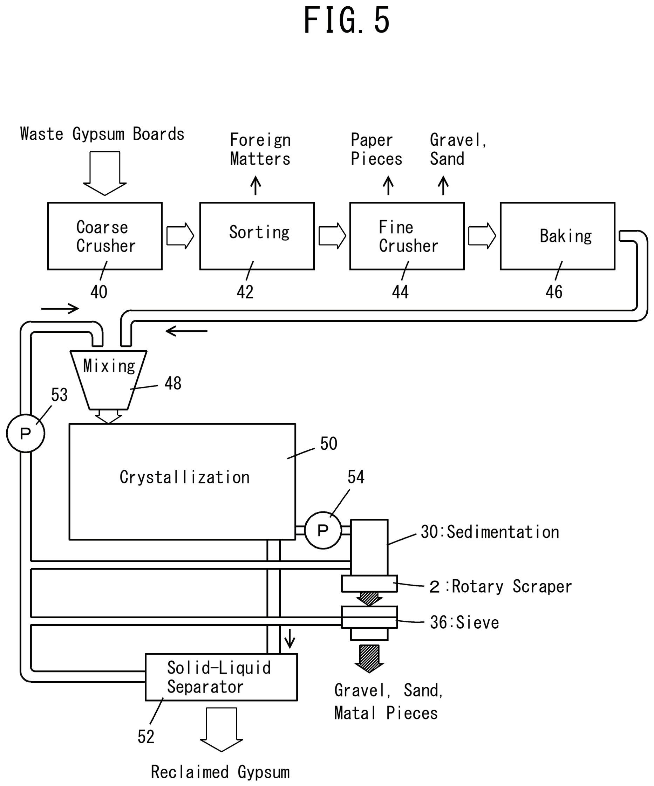

Fig. 5 shows an embodiment of a method for discharging high specific gravity foreign matters in gypsum slurry. The embodiment is part of the method for reclaiming gypsum from waste gypsum boards. The waste gypsum boards are crushed by a coarse crusher 40, and the crushed pieces are transported by a sorting conveyor 42 with large foreign matters being removed. Then, the coarsely crushed pieces are further crushed by a fine crusher 44, and paper pieces derived from the gypsum boards are separated by sieving. Gravel, sand, small metallic pieces, and other foreign matters are separated by a sieve and a magnetic separator. The gypsum powder thus pretreated is then baked in a baking apparatus 46 and converted to hemihydrate gypsum and or anhydrous type III gypsum.

The baked gypsum powder and gypsum slurry or other aqueous media are mixed in a mixing tank 48, and gypsum particles such as dihydrate gypsum are generated in a crystallization tank 50. The generated gypsum particles are extracted by a solid-liquid separator 52, and the resultant gypsum slurry is recirculated to the mixing tank 48 by a pump 53, for example.

While gravel and so on, are separated prior to baking, enough separation is difficult. Therefore, in the crystallization tank 50, when gypsum particles once dissolve in the slurry, the foreign matters separate from gypsum, and foreign matters such as gravel, screws, nails, and especially gravel settle in the slurry. These foreign matters damage pumps, impellers, pipes, and other equipment. Therefore, the gypsum slurry is supplied to the sedimentation tank 30, for example by a pump 54 or by natural flow, and the slurry and the heavy foreign matters are separated by gravitational settling. The foreign matters such as gravel settle at the bottom of the sedimentation tank 30 and is discharged by the rotary scraper 2. A sieve 36 separates the foreign matters from the slurry, and the slurry is recirculated to the mixing tank 48, for example. Regarding the rotary scraper 2 according to the embodiment, the resin films 7, 8 wear slowly, and tightening the bolts 16 compensates the wear. Therefore, the reclaiming of gypsum is operated stably over a long running period without interruption.

### Description of Symbols

- 2, 2': Rotary scraper
- 3,4: Plate
- 6: Rotating plates
- 7, 8: Resin films
- 10: Plate
- 12: Motor
- 14: Shaft
- 16: Bolt
- 17: Nut
- 18: Elastic ring
- 20, 22, 24: Opening
- 25 a, b: Opening
- 26: Nozzle
- 28: Pump
- 30: Sedimentation tank
- 32: Opening
- 33: Gravel
- 34: Slurry
- 36: Sieve
- 40: Coarse crusher
- 42: Sorting conveyor
- 44: Fine crusher
- 46: baking apparatus
- 48: Mixing tank
- 50: Crystallization tank
- 52: Solid-liquid separator
- 53,54: Pump

## Claims

1. A rotary scraper comprising at least three plates of an upper plate; a lower plate; and an intermediate plate between the upper plate and the lower plate; said at least three plates overlapping with each other in a plan view,
wherein said at least three plates have openings passing through the plates in a vertical direction respectively, and
a means for rotating the intermediate plate;
wherein said openings are arranged to switch, by rotation of the intermediate plate, between a state where the opening of the upper plate and the opening of the intermediate plate are overlapped and the opening of the intermediate plate is not overlapped with the opening of the lower plate and
a state where the opening of the intermediate plate and the opening of the lower plate are overlapped and the opening of the intermediate plate is not overlapped with the opening of the upper plate.

2. The rotary scraper according to claim 1, further comprising at least two resin films between the upper plate and the intermediate plate and between the intermediate plate and the lower plate;
wherein the resin films are fixed to one of the plates respectively and are provided with openings respectively passing through the resin films and overlapping the openings of the plates to which the films are fixed to;
wherein the upper plate and the lower plate are larger in diameter than the intermediate plate;
an elastic ring surrounding annually the intermediate plate; and
a fastener mechanism compressing the elastic ring and fastening the upper plate and the lower plate with adjusting the gap between the upper plate and the lower plate.

3. A method for discharging foreign matters having high specific gravity in gypsum slurry with usage of the rotary scraper according to claim 1 or 2,
attaching the rotary scraper on a bottom of a tank for gypsum slurry;
making sediment of foreign matters having high specific gravity in gypsum slurry on the bottom of the tank;
introducing said sediment of the foreign matters through an opening at the bottom of the tank into the opening of the upper plate; and
moving the sediment into the opening of the intermediate plate and then discharging the sediment to an outside from the opening of the intermediate plate through the opening of the lower plate, by the rotation of the intermediate plate.
